# EUROPEAN PATENT APPLICATION

(11) **EP 4 817 909 A1**
(43) Date of publication of application: **07.10.2026**
(21) Application number: 23960024.0
(22) Date of filing: 19.12.2023
(51) Int. Cl.: B60H 1/32

(54) **LOW-TEMPERATURE CONTROL METHOD AND DEVICE FOR HEAT PUMP SYSTEM, AND VEHICLE**

(30) Priority: 28.11.2023 CN 202311613947
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: JIN, Xinliang, Hangzhou, Zhejiang 310051 (CN); ZHU, Wenzheng, Hangzhou, Zhejiang 310051 (CN); CHEN, Chong, Hangzhou, Zhejiang 310051 (CN); WANG, Yunteng, Hangzhou, Zhejiang 310051 (CN)
(74) Representative: Range, Christopher William
(86) International application number: PCT/CN2023/139956
(87) International publication number: WO 2025/112122

(57) **Abstract**

Provided are a low-temperature control method and a low-temperature control device for a heat pump system, and a vehicle. The heat pump system includes a heat pump circuit (10). The heat pump circuit (10) includes a compressor (11) and a first throttling element (12). Two ends of the first throttling element (12) are respectively connected to an exhaust port and an intake port of the compressor (11). The low-temperature control method includes: in response to a start-up instruction of the heat pump system, controlling the compressor (11) to operate; and adjusting an intake pressure of the compressor (11) through controlling an opening degree of the first throttling element (12) until a suction superheat degree exists at the intake port of the compressor (11); and adjusting a rotating speed of the compressor (11) gradually; and adjusting the intake pressure of the compressor (11) through controlling the opening degree of the first throttling element (12) to gradually adjust the rotating speed of the compressor (11) to a target rotating speed while maintaining the intake pressure of the compressor (11) within a predetermined intake pressure range.

## Description

### CROSS-REFERENCE TO RELATED APPLICATION

This application claims priority to Chinese patent application No. 202311613947.5, titled "low-temperature control method and device for heat pump system, and vehicle" and filed on November 28, 2023, the entire contents of which are incorporated herein by reference.

### FIELD

The present disclosure relates to the field of vehicle technologies, and more particularly, to low-temperature control method and device for a heat pump system, and a vehicle.

### BACKGROUND

At present, a market share of new energy electric vehicles is gradually increasing. To improve an energy utilization rate of electric vehicles and reduce overall vehicle power consumption, more electric vehicles are equipped with heat pump systems as standard.

In the related art, to allow the heat pump system to operate in a lower ambient temperature, a heat generation technology of an electric drive main unit supplies heat to the heat pump system, and a hot gas bypass of a compressor increases the compressor's heat output. However, in a low-temperature environment, problems such as excessively low intake pressure or excessively rapid increase in a rotating speed of the compressor usually occur in a process of a cold start of the compressor, which results in compressor failure.

### SUMMARY

The present disclosure aims to solve, at least to some extent, at least one of the technical problems in the related art. To this end, a first embodiment of the present disclosure is to provide a low-temperature control method for a heat pump system. The low-temperature control method can control a first throttling element based on an intake pressure of a compressor, effectively avoiding damage to the compressor caused by an excessively low intake pressure. The low-temperature control method also adjusts a rotating speed based on a feedback of the intake pressure of the compressor, thus preventing damage to the compressor due to vacuum pumping caused by an excessively rapid increase in a rotating speed.

A second embodiment of the present disclosure is to provide a heat pump system.

A third embodiment of the present disclosure is to provide a low-temperature control device for a heat pump system.

A fourth embodiment of the present disclosure is to provide a vehicle.

To achieve the above embodiments, an embodiment of a first aspect of the present disclosure provides a low-temperature control method for a heat pump system. The heat pump system includes a heat pump circuit. The heat pump circuit includes a compressor and a first throttling element. Two ends of the first throttling element are respectively connected to an exhaust port and an intake port of the compressor. The low-temperature control method includes: in response to a start-up instruction of the heat pump system, controlling the compressor to operate; and adjusting an intake pressure of the compressor through controlling an opening degree of the first throttling element until a suction superheat degree exists at the intake port of the compressor; and adjusting a rotating speed of the compressor gradually; and adjusting the intake pressure of the compressor through controlling the opening degree of the first throttling element to gradually adjust the rotating speed of the compressor to a target rotating speed while maintaining the intake pressure of the compressor within a predetermined intake pressure range.

According to the low-temperature control method for the heat pump system provided in the embodiment of the present disclosure, in response to the start-up instruction of the heat pump system, the compressor is controlled to operate, and the intake pressure of the compressor is adjusted through controlling the opening degree of the first throttling element until the suction superheat degree exists at the intake port of the compressor. Then, the rotating speed of the compressor is gradually adjusted; and the intake pressure of the compressor is adjusted through controlling the opening degree of the first throttling element to gradually adjust the rotating speed of the compressor to the target rotating speed while maintaining the intake pressure of the compressor within the predetermined intake pressure range. Thus, the low-temperature control method can control the first throttling element based on the intake pressure of the compressor, effectively avoiding the damage to the compressor caused by the excessively low intake pressure. The low-temperature control method also adjusts the rotating speed based on the feedback of the intake pressure of the compressor, thus preventing the damage to the compressor due to vacuum pumping caused by the excessively rapid increase in the rotating speed.

In addition, according to the low-temperature control method for the heat pump system provided in the above embodiments of the present disclosure, the low-temperature control method may further include the following additional technical features.

According to an embodiment of the present disclosure, said controlling the compressor to operate, and adjusting the intake pressure of the compressor through controlling the opening degree of the first throttling element until the suction superheat degree exists at the intake port of the compressor includes: controlling the compressor to operate at a first predetermined rotating speed; maintaining the opening degree of the first throttling element at a first predetermined opening degree; and obtaining the intake pressure of the compressor; and in response to the intake pressure increasing to a first predetermined intake pressure, decreasing the opening degree of the first throttling element to lower the intake pressure; and in response to the intake pressure decreasing to a second predetermined intake pressure, maintaining the opening degree of the first throttling element unchanged until the suction superheat degree exists at the intake port of the compressor. The first predetermined rotating speed is smaller than the target rotating speed. The first predetermined intake pressure is greater than the second predetermined intake pressure.

According to an embodiment of the present disclosure, the low-temperature control method further includes: obtaining an intake temperature of the compressor; and determining a saturation temperature corresponding to the intake pressure; obtaining a temperature difference between the intake temperature and the saturation temperature corresponding to the intake pressure; and when the temperature difference is greater than a predetermined temperature difference, determining that the suction superheat degree exists at the intake port of the compressor.

According to an embodiment of the present disclosure, said adjusting the rotating speed of the compressor gradually; and adjusting the intake pressure of the compressor through controlling the opening degree of the first throttling element to gradually adjust the rotating speed of the compressor to the target rotating speed while maintaining the intake pressure of the compressor within the predetermined intake pressure range includes: increasing the rotating speed of the compressor based on a predetermined step size; and obtaining the intake pressure of the compressor; and in response to the intake pressure reaching the second predetermined intake pressure, maintaining the rotating speed of the compressor unchanged; and increasing the opening degree of the first throttling element to raise the intake pressure; and in response to the intake pressure increasing to the first predetermined intake pressure, maintaining the opening degree of the first throttling element unchanged; and returning to an operation of increasing the rotating speed of the compressor based on the predetermined step size until the rotating speed of the compressor is gradually adjusted to the target rotating speed.

According to an embodiment of the present disclosure, the heat pump circuit further includes a first heat exchanger connected to the exhaust port of the compressor at a first end of the first heat exchanger, a second heat exchanger, and a second throttling element. The first heat exchanger is connected to an end of the second throttling element at a second end of the first heat exchanger. The other end of the second throttling element is connected to a first end of the second heat exchanger. The second heat exchanger is connected to the intake port of the compressor at a second end of the second heat exchanger. The low-temperature control method further includes, subsequent to gradually adjusting the rotating speed of the compressor to the target rotating speed: obtaining the suction superheat degree of the compressor; and controlling an opening degree of the second throttling element based on the suction superheat degree to maintain the suction superheat degree within a predetermined suction superheat degree range.

According to an embodiment of the present disclosure, said controlling the opening degree of the second throttling element based on the suction superheat degree to maintain the suction superheat degree within the predetermined suction superheat degree range includes: increasing the opening degree of the second throttling element when the suction superheat degree is greater than a first predetermined superheat degree; and decreasing the opening degree of the second throttling element when the suction superheat degree is smaller than a second predetermined superheat degree. The first predetermined superheat degree is greater than the second predetermined superheat degree.

According to an embodiment of the present disclosure, the low-temperature control method further includes, subsequent to increasing or decreasing the opening degree of the second throttling element: obtaining the intake pressure of the compressor; and maintaining the intake pressure within the predetermined intake pressure range through controlling the opening degree of the first throttling element based on the intake pressure.

According to an embodiment of the present disclosure, said maintaining the intake pressure within the predetermined intake pressure range through controlling the opening degree of the first throttling element based on the intake pressure includes: decreasing the opening degree of the first throttling element when the intake pressure is greater than a first predetermined intake pressure; and increasing the opening degree of the first throttling element when the intake pressure is smaller than a second predetermined intake pressure. The first predetermined intake pressure is greater than the second predetermined intake pressure.

To achieve the above embodiments, an embodiment of a second aspect of the present disclosure provides a heat pump system. The heat pump system includes a memory, a processor, and a program stored on the memory and executable on the processor. The processor, when executes the program, implements the low-temperature control method for the heat pump system as described above.

According to the heat pump system provided in the embodiments of the present disclosure, through the low-temperature control method for the heat pump system as described above, the first throttling element can be controlled based on the intake pressure of the compressor, effectively avoiding the damage to the compressor caused by the excessively low intake pressure. The rotating speed can also be adjusted based on the feedback of the intake pressure of the compressor, thus preventing the damage to the compressor due to vacuum pumping caused by the excessively rapid increase in the rotating speed.

To achieve the above embodiments, an embodiment of a third aspect of the present disclosure provides a low-temperature control device for a heat pump system. The heat pump system includes a heat pump circuit. The heat pump circuit includes a compressor and a first throttling element. Two ends of the first throttling element are respectively connected to an exhaust port and an intake port of the compressor. The low-temperature control device includes: a first control module configured to, in response to a start-up instruction of the heat pump system, control the compressor to operate; and adjust an intake pressure of the compressor through controlling an opening degree of the first throttling element until a suction superheat degree exists at the intake port of the compressor; and a second control module configured to, subsequent to determining that the suction superheat degree exists at the intake port of the compressor, adjust a rotating speed of the compressor gradually; and adjust the intake pressure of the compressor through controlling the opening degree of the first throttling element to gradually adjust the rotating speed of the compressor to a target rotating speed while maintaining the intake pressure of the compressor within a predetermined intake pressure range.

According to the low-temperature control device for the heat pump system provided in the embodiments of the present disclosure, the first control module is configured to, in response to the start-up instruction of the heat pump system, control the compressor to operate; and adjust the intake pressure of the compressor through controlling the opening degree of the first throttling element until the suction superheat degree exists at the intake port of the compressor. The second control module is configured to, subsequent to determining that the suction superheat degree exists at the intake port of the compressor, adjust the rotating speed of the compressor gradually; and adjust the intake pressure of the compressor through controlling the opening degree of the first throttling element to gradually adjust the rotating speed of the compressor to the target rotating speed while maintaining the intake pressure of the compressor within the predetermined intake pressure range. Thus, the low-temperature control device can control the first throttling element based on the intake pressure of the compressor, effectively avoiding the damage to the compressor caused by the excessively low intake pressure. The low-temperature control device also adjusts the rotating speed based on the feedback of the intake pressure of the compressor, thus preventing the damage to the compressor due to vacuum pumping caused by the excessively rapid increase in the rotating speed.

To achieve the above embodiments, an embodiment of a fourth aspect of the present disclosure provides a vehicle. The vehicle includes the above heat pump system, or the above low-temperature control device for the heat pump system.

According to the vehicle provided in the embodiments of the present disclosure, in the heat pump system or the low-temperature control device for the heat pump system as described above, the first throttling element can be controlled based on the intake pressure of the compressor, effectively avoiding the damage to the compressor caused by the excessively low intake pressure. The rotating speed can also be adjusted based on the feedback of the intake pressure of the compressor, preventing the damage to the compressor due to vacuum pumping caused by the excessively rapid increase in the rotating speed.

Additional aspects and advantages of the present disclosure will be provided in part in the following description, or will become apparent in part from the following description, or can be learned from practicing of the present disclosure.

### BRIEF DESCRIPTION OF THE DRAWINGS

FIG. 1 is a flowchart of a low-temperature control method for a heat pump system according to an embodiment of the present disclosure.
FIG. 2 is a schematic structural view of a heat pump system according to an embodiment of the present disclosure.
FIG. 3 is a flowchart of a low-temperature control method for a heat pump system according to an embodiment of the present disclosure.
FIG. 4 is a block diagram of a heat pump system according to an embodiment of the present disclosure.
FIG. 5 is a block diagram of a low-temperature control device for a heat pump system according to an embodiment of the present disclosure.
FIG. 6 is a block diagram of a vehicle according to an embodiment of the present disclosure.
FIG. 7 is a block diagram of a vehicle according to an another embodiment of the present disclosure.

### Reference numerals of the accompanying drawings:

heat pump circuit 10; compressor 11; first throttling element 12; first heat exchanger 13; second heat exchanger 14; second throttling element 15;
warm air circuit 30; nine-way valve 40; three-way valve; battery heat exchange circuit 60; electric drive heat exchange circuit 70; ambient heat exchange circuit 80;
heat pump system 200; memory 210; processor 220;
low-temperature control device 100 for the heat pump system; first control module 110; second control module 120; and
vehicle 300.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

The low-temperature control method for a heat pump system, the heat pump system, a low-temperature control device for the heat pump system, and a vehicle provided in the embodiments of the present disclosure are described below with reference to the accompanying drawings.

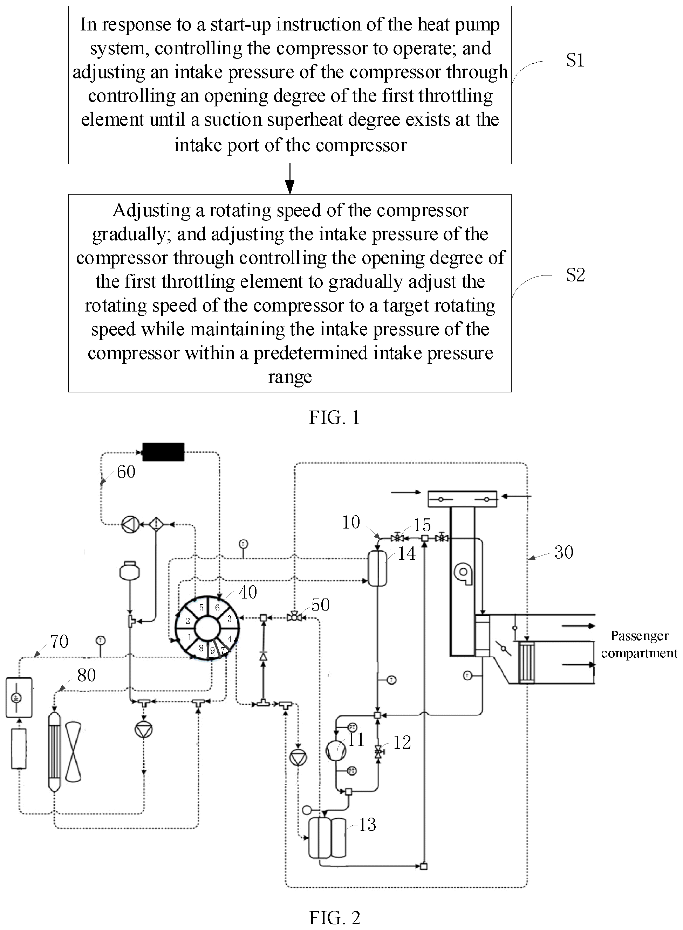

FIG. 1 is a flowchart of the low-temperature control method for the heat pump system according to an embodiment of the present disclosure.

In some embodiments of the present disclosure, as illustrated in FIG. 2, the heat pump system includes a heat pump circuit 10. The heat pump circuit 10 includes a compressor 11 and a first throttling element 12. Two ends of the first throttling element 12 are respectively connected to an exhaust port and an intake port of the compressor 11. The first throttling element may be an expansion valve.

As illustrated in FIG. 1, the low-temperature control method for the heat pump system provided in the embodiments of the present disclosure may include the following operations in blocks S1 to S2.

Block S1, in response to a start-up instruction of the heat pump system, the compressor is controlled to operate; and an intake pressure of the compressor is adjusted through controlling an opening degree of the first throttling element until a suction superheat degree exists at the intake port of the compressor.

Block S2, a rotating speed of the compressor is adjusted gradually; and the intake pressure of the compressor is adjusted through controlling the opening degree of the first throttling element to gradually adjust the rotating speed of the compressor to a target rotating speed while maintaining the intake pressure of the compressor within a predetermined intake pressure range. The predetermined intake pressure range may be calibrated based on actual conditions, for example, the predetermined intake pressure range may be 1.18 bar to 1.22 bar. The target rotating speed refers to a rotating speed of the compressor corresponding to a heating demand of the heat pump system, for example, a controller of the heat pump system may obtain a target temperature of a water-cooled condenser based on the heating demand, and then perform PID calculation based on the target temperature of the water-cooled condenser and a current temperature, to obtain the target rotating speed of the compressor.

To be specific, in a low-temperature environment, subsequent to receiving the start-up instruction, the controller of the heat pump system performs a cold start of the compressor while simultaneously controlling the opening degree the first throttling element to a maximum opening degree. At this time, there is basically no available heat in the heat pump system and the environment, and no superheat degree exists at the intake port of the compressor. Under this condition, based on the predetermined intake pressure range of the compressor, the controller controls the compressor to increase the rotating speed, in such a manner that the compressor is controlled to be operated at a relatively low rotating speed. A refrigerant in the compressor flows out from the exhaust port and then enters the intake port through the first throttling element, and the refrigerant is heated through own heat of the compressor. The intake pressure increases gradually, and when the intake pressure becomes relatively large, the opening degree of the first throttling element is appropriately decreased to decrease the intake pressure until the suction superheat degree exists at the intake port of the compressor.

Subsequent to determining that the suction superheat degree exists at the intake port of the compressor, in response to the compressor not reaching the target rotating speed, the controller increases the rotating speed gradually. When the intake pressure of the compressor decreases to the predetermined intake pressure range, the rotating speed of compressor may be controlled to stop increasing, maintaining a current rotating speed. In addition, the intake pressure is gradually increased through increasing the opening degree of the first throttling element. When the intake pressure is relatively large, the rotating speed of the compressor is gradually increased. In such a cyclic manner, the rotating speed of the compressor can be gradually adjusted to the target rotating speed while maintaining the intake pressure of the compressor within the predetermined intake pressure range.

Thus, the low-temperature control method of the present disclosure is capable of controlling the first throttling element based on the intake pressure of the compressor, which can effectively avoid damage to the compressor caused by the excessively low intake pressure. In addition, the low-temperature control method is capable of adjusting the rotating speed based on a feedback of the intake pressure of the compressor, thus preventing damage to the compressor due to vacuum pumping caused by an the excessively rapid increase in the rotating speed.

In an embodiment of the present disclosure, when the heat pump system is applied to a vehicle, prior to controlling the compressor to operate, and adjusting the intake pressure of the compressor through controlling the opening degree of the first throttling element until the suction superheat degree exists at the intake port of the compressor, the low-temperature control method further includes: obtaining an ambient temperature and a standing duration of the vehicle; when the ambient temperature is smaller than a predetermined temperature threshold and the standing duration is greater than a predetermined duration, controlling the compressor to operate, and adjusting the intake pressure of the compressor through controlling the opening degree of the first throttling element until the suction superheat degree exists at the intake port of the compressor. The predetermined temperature threshold and the predetermined duration may be calibrated based on the actual conditions. For example, the predetermined temperature threshold may be -10 °C, and the predetermined duration may be 6 hours.

To be specific, when the vehicle is equipped with the heat pump system, as illustrated in FIG. 2, the heat pump system further includes a warm air circuit 30, a battery heat exchange circuit 60, an electric drive heat exchange circuit 70, and an ambient heat exchange circuit 80. When heat supplement capacity is sufficient, it is indicated that the current heat pump circuit 10 has adequate heat to supply to the warm air circuit 30. Thus, the surplus heat may be discharged to one or more of the battery heat exchange circuit 60, the electric drive heat exchange circuit 70, and the ambient heat exchange circuit 80. When the heat supplement capacity is insufficient, the warm air circuit 30 or the heat pump circuit 10 may be controlled to absorb heat from at least one of the battery heat exchange circuit 60, the electric drive heat exchange circuit 70, or the ambient heat exchange circuit 80, to supplement heat for a passenger compartment. That is, when the heat supplement capacity is insufficient, it is indicated that the current heat pump circuit 10 lacks adequate heat to supply to the warm air circuit 30. Therefore, one or more of the battery heat exchange circuit 60, the electric drive heat exchange circuit 70, and the ambient heat exchange circuit 80 may discharge heat to the warm air circuit 30, thus increasing heat of the refrigerant in the warm air circuit 30 to supplement heat for the passenger compartment. Heat may also be discharged to the heat pump circuit 10 through one or more of the battery heat exchange circuit 60, the electric drive heat exchange circuit 70, and the ambient heat exchange circuit 80, and the heat pump circuit supplies heat to the warm air circuit to supplement heat for the passenger compartment. The heat pump system further includes a nine-way valve 40 and a three-way valve 50. The warm air circuit 30 is connected to the battery heat exchange circuit 60, the electric drive heat exchange circuit 70, and the ambient heat exchange circuit 80 through the nine-way valve 40 and the three-way valve 50. By controlling the nine-way valve 40 and the three-way valve 50, the heat pump circuit 10 may be controlled to supply heat to the warm air circuit 30, to supplement heat for the passenger compartment, and control the warm air circuit 30 to absorb heat from either the battery heat exchange circuit 60 or the electric drive heat exchange circuit 70, or to discharge heat to at least one of the battery heat exchange circuit 60, the electric drive heat exchange circuit 70, or the ambient heat exchange circuit 80.

Further, when the ambient temperature is lower than -10°C and the standing duration of the vehicle exceeds 6 hours, there is basically no available heat in the battery heat exchange circuit, the electric drive heat exchange circuit, and the ambient heat exchange circuit of the heat pump system. Subsequent to receiving the start-up instruction, the controller of the heat pump system performs the cold start of the compressor while simultaneously controlling the opening degree of the first throttling element to the maximum opening degree. At this time, no superheat degree exists at the intake port of the compressor. Under this condition, based on the predetermined intake pressure range of the compressor, the controller controls the compressor to increase the rotating speed, in such a manner that the compressor is controlled to be operated at the relatively low rotating speed. The refrigerant is heated through own heat of the compressor. When the intake pressure becomes relatively large, the opening degree of the first throttling element is appropriately decreased to decrease the intake pressure until the suction superheat degree exists at the intake port of the compressor.

According to an embodiment of the present disclosure, controlling the compressor to operate, and adjusting the intake pressure of the compressor through controlling the opening degree of the first throttling element until the suction superheat degree exists at the intake port of the compressor includes: controlling the compressor to operate at a first predetermined rotating speed; maintaining the opening degree of the first throttling element at a first predetermined opening degree; and obtaining the intake pressure of the compressor; and in response to the intake pressure increasing to a first predetermined intake pressure, decreasing the opening degree of the first throttling element to lower the intake pressure; and in response to the intake pressure decreasing to a second predetermined intake pressure, maintaining the opening degree of the first throttling element unchanged until the suction superheat degree exists at the intake port of the compressor. The first predetermined rotating speed is smaller than the target rotating speed. The first predetermined intake pressure is greater than the second predetermined intake pressure. For example, the first predetermined rotating speed may be 3000 rpm, the target rotating speed may be 8000 rpm, the first predetermined intake pressure may be 1.35 bar, the second predetermined intake pressure may be 1.22 bar, and the first predetermined opening degree may be the maximum opening degree.

To be specific, subsequent to receiving the start-up instruction, the controller of the heat pump system performs the cold start of the compressor while simultaneously controlling the opening degree the first throttling element to the maximum opening degree (i.e. the first predetermined opening degree). At this time, there is basically no available heat in the battery heat exchange circuit, the electric drive heat exchange circuit, and the ambient heat exchange circuit of the heat pump system, and no superheat degree exists at the intake port of the compressor. Under this condition, based on the predetermined intake pressure range of the compressor, the controller controls the compressor to increase the rotating speed to the first predetermined rotating speed, in such a manner that the compressor is controlled to be operated at the first predetermined rotating speed, and the refrigerant is heated through the own heat of the compressor. When the intake pressure increases to 1.35 bar (i.e., the first predetermined intake pressure), the opening degree of the first throttling element is decreased, and an amount of the refrigerant flowing to the intake port of the compressor is decreased, thus lowering the intake pressure. When the intake pressure decreases to 1.22 bar (i.e., the second predetermined intake pressure), the opening degree of the first throttling element maintains unchanged. The above process is repeated cyclically until the suction superheat degree exists at the intake port of the compressor.

According to an embodiment of the present disclosure, the above low-temperature control method further includes: obtaining an intake temperature of the compressor; and determining a saturation temperature corresponding to the intake pressure; obtaining a temperature difference between the intake temperature and the saturation temperature corresponding to the intake pressure; and when the temperature difference is greater than a predetermined temperature difference, determining that the suction superheat degree exists at the intake port of the compressor. The predetermined temperature difference may be calibrated based on the actual conditions.

To be specific, the controller may obtain the intake temperature of the compressor by means of a temperature sensor disposed at the intake port of the compressor, obtain the intake pressure of the compressor by means of a pressure sensor disposed at the intake port of the compressor, and determine the saturation temperature corresponding to the intake pressure by looking up a table. It should be understood that the table for the lookup is a saturation temperature-pressure table, which refers to a table showing pressure values corresponding to a certain refrigerant at saturation temperatures. The controller calculates the temperature difference by subtracting the saturation temperature corresponding to the intake pressure from the intake temperature, and compares the temperature difference with the predetermined temperature difference. When the temperature difference is greater than the predetermined temperature difference, it may be determined that the suction superheat degree exists at the intake port of the compressor.

According to an embodiment of the present disclosure, adjusting the rotating speed of the compressor gradually; and adjusting the intake pressure of the compressor through controlling the opening degree of the first throttling element to gradually adjust the rotating speed of the compressor to the target rotating speed while maintaining the intake pressure of the compressor within the predetermined intake pressure range includes: increasing the rotating speed of the compressor based on a predetermined step size; and obtaining the intake pressure of the compressor; and in response to the intake pressure reaching the second predetermined intake pressure, maintaining the rotating speed of the compressor unchanged; and increasing the opening degree of the first throttling element to raise the intake pressure; and in response to the intake pressure increasing to the first predetermined intake pressure, maintaining the opening degree of the first throttling element unchanged; and returning to an operation of increasing the rotating speed of the compressor based on the predetermined step size until the rotating speed of the compressor is gradually adjusted to the target rotating speed. The predetermined step size may be calibrated based on the actual conditions. For example, the predetermined step size may be 50 rpm/s.

To be specific, in a process of the superheat degree existing at the compressor, as electric drive components operate, heat of the electric drive heat exchange circuit is transferred to the compressor, which will cause the intake pressure of the compressor to increase. When the suction superheat degree exists at the intake port of the compressor, the controller controls the compressor to increase the rotating speed starting from the first predetermined rotating speed based on the predetermined step size. With the increase in the rotating speed, an amount of the refrigerant drawn by the compressor subsequent to gas intake increases, and the intake pressure of the compressor decreases gradually. When the intake pressure decreases to the second predetermined intake pressure, the compressor stops increasing the rotating speed and maintains a current rotating speed, while increasing the opening degree of the first throttling element to raise the intake pressure. Until the intake pressure increases to the first predetermined intake pressure, the opening degree of the first throttling element maintains unchanged, and then the compressor is controlled to increase the rotating speed starting from the first predetermined rotating speed based on the predetermined step size. When the intake pressure reaches the second predetermined intake pressure, the rotating speed of the compressor maintains unchanged, and the opening degree of the first throttling element is increased to raise the intake pressure. When the intake pressure increases to the first predetermined intake pressure, the opening degree of the first throttling element maintains unchanged. The above process is repeated cyclically until the rotating speed of the compressor is gradually adjusted to the target rotating speed.

According to an embodiment of the present disclosure, as illustrated in FIG. 2, the heat pump circuit 10 further includes a first heat exchanger 13 connected to the exhaust port of the compressor 11 at a first end of the first heat exchanger 13, a second heat exchanger 14, and a second throttling element 15. The first heat exchanger 13 is connected to an end of the second throttling element 15 at a second end of the first heat exchanger 13. The other end of the second throttling element 15 is connected to a first end of the second heat exchanger 14. The second heat exchanger 14 is connected to the intake port of the compressor 11 at a second end of the second heat exchanger 14. The low-temperature control method further includes, subsequent to gradually adjusting the rotating speed of the compressor to the target rotating speed: obtaining the suction superheat degree of the compressor; and controlling an opening degree of the second throttling element based on the suction superheat degree to maintain the suction superheat degree within a predetermined suction superheat degree range. The predetermined suction superheat degree range may be calibrated based the actual conditions. The first heat exchanger may be a water-cooled condenser, and the second throttling element may be an expansion valve.

To be specific, subsequent to determining that the superheat degree exists at the compressor, the controller controls the second throttling element to open to a certain opening degree, and a pressure at the intake port of the compressor will also increase. Subsequent to the rotating speed of the compressor is gradually adjusted to the target rotating speed through the above operations, the controller obtains the suction superheat degree of the compressor. When the suction superheat degree is higher than the predetermined suction superheat degree range, the opening degree of the second throttling element is increased to increase the intake pressure, thus decreasing the suction superheat degree. When the suction superheat degree is lower than the predetermined suction superheat degree range, the opening degree of the second throttling element is decreased to lower the intake pressure, thus increasing the suction superheat degree. In this way, the suction superheat degree is maintained within the predetermined suction superheat degree range.

According to an embodiment of the present disclosure, controlling the opening degree of the second throttling element based on the suction superheat degree to maintain the suction superheat degree within the predetermined suction superheat degree range includes: increasing the opening degree of the second throttling element when the suction superheat degree is greater than a first predetermined superheat degree; and decreasing the opening degree of the second throttling element when the suction superheat degree is smaller than a second predetermined superheat degree. The first predetermined superheat degree is greater than the second predetermined superheat degree. The first predetermined superheat degree and the second predetermined superheat degree may be calibrated based on the actual conditions.

That is to say, when the suction superheat degree is greater than the first predetermined superheat degree, the controller may increase the opening degree of the second throttling element to raise the intake pressure, thus decreasing the suction superheat degree. When the suction superheat degree is smaller than the second predetermined superheat degree, the controller may decrease the opening degree of the second throttling element to lower the intake pressure, thus increasing the suction superheat degree. In this way, the suction superheat degree is maintained within a range from the second predetermined superheat degree to the first predetermined superheat degree.

According to an embodiment of the present disclosure, the low-temperature control method further includes, subsequent to increasing or decreasing the opening degree of the second throttling element: obtaining the intake pressure of the compressor; and maintaining the intake pressure within the predetermined intake pressure range through controlling the opening degree of the first throttling element based on the intake pressure.

Further, according to an embodiment of the present disclosure, maintaining the intake pressure within the predetermined intake pressure range through controlling the opening degree of the first throttling element based on the intake pressure includes: decreasing the opening degree of the first throttling element when the intake pressure is greater than the first predetermined intake pressure; and increasing the opening degree of the first throttling element when the intake pressure is smaller than the second predetermined intake pressure. The first predetermined intake pressure is greater than the second predetermined intake pressure.

To be specific, when the suction superheat degree is greater than the first predetermined superheat degree, the controller may increase the opening degree of the second throttling element. In this case, the intake pressure increases. If the intake pressure is greater than the first predetermined intake pressure, the controller may decrease the opening degree of the first throttling element, decreasing the intake pressure. If the intake pressure is smaller than the second predetermined intake pressure, the controller may increase the opening degree of the first throttling element, increasing the intake pressure. Similarly, when the suction superheat degree is lower than the second predetermined superheat degree, the controller may decrease the opening degree of the second throttling element, and the intake pressure will decrease accordingly. If the intake pressure is smaller than the second predetermined intake pressure, the controller may increase the opening degree of the first throttling element to raise the intake pressure. If the intake pressure is greater than the first predetermined intake pressure, the controller may decrease the opening degree of the first throttling element to lower the intake pressure. When the intake pressure falls within the predetermined intake pressure range, the controller may maintain the opening degree of the first throttling element unchanged.

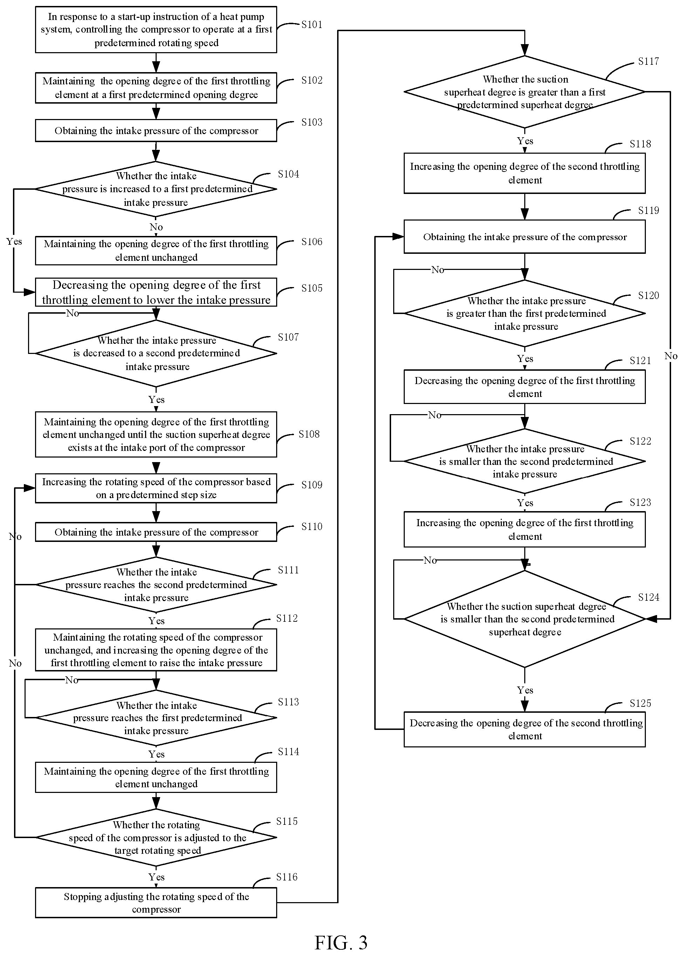

The low-temperature control method for the heat pump system of the present disclosure is described below with reference to FIG. 3.

As a specific example, as illustrated in FIG. 3, the low-temperature control method for the heat pump system of the present disclosure may include the following operations in blocks S101 to S125.

Block S101, in response to the start-up instruction of the heat pump system, the compressor is controlled to be operated at the first predetermined rotating speed.

Block S102, the opening degree of the first throttling element is maintained at the first predetermined opening degree.

Block S103, obtaining the intake pressure of the compressor.

Block S104, whether the intake pressure is increased to the first predetermined intake pressure is determined. If the intake pressure is increased to the first predetermined intake pressure, executing block S105; and if the intake pressure is not increased to the first predetermined intake pressure, executing block S106.

Block 105, the opening degree of the first throttling element to lower the intake pressure is decreased.

Block 106, the opening degree of the first throttling element is maintained unchanged.

Block 107, whether the intake pressure is decreased to the second predetermined intake pressure is determined. If the intake pressure is decreased to the second predetermined intake pressure, executing block S108; and if the intake pressure is not decreased to the second predetermined intake pressure, returning to block S107.

Block S108, the opening degree of the first throttling element is maintained unchanged until the suction superheat degree exists at the intake port of the compressor.

Block S109, the rotating speed of the compressor is increased based on the predetermined step size.

Block S110, the intake pressure of the compressor is obtained.

Block S111, whether the intake pressure reaches the second predetermined intake pressure is determined. If the intake pressure reaches the second predetermined intake pressure, the block S112 is executed; and if the intake pressure does not reach the second predetermined intake pressure, the block S109 returned.

Block S112, the rotating speed of the compressor is maintained unchanged, and the opening degree of the first throttling element is increased to raise the intake pressure.

Block S113, whether the intake pressure reaches the first predetermined intake pressure is determined. If the intake pressure reaches the first predetermined intake pressure, the block S114 is executed. If the intake pressure does not reach the first predetermined intake pressure, the block S113 is returned.

Block S114, the opening degree of the first throttling element is maintained unchanged.

Block S115, whether the rotating speed of the compressor is adjusted to the target rotating speed is determined. If the rotating speed of the compressor is adjusted to the target rotating speed, the block S116 is executed. If the rotating speed of the compressor is not adjusted to the target rotating speed, the block S109 is returned.

Block S116, the adjusting of the rotating speed of the compressor is stopped.

Block S117, whether the suction superheat degree is greater than the first predetermined superheat degree is determined. If the suction superheat degree is greater than the first predetermined superheat degree, the block S118 is executed. If the suction superheat degree is not greater than the first predetermined superheat degree, block S124 is executed.

Block S118, the opening degree of the second throttling element is increased.

Block S119, obtaining the intake pressure of the compressor.

Block S120, determining whether the intake pressure is greater than the first predetermined intake pressure. If the intake pressure is greater than the first predetermined intake pressure, the block S121 is executed. If the intake pressure is not greater than the first predetermined intake pressure, the block S120 is returned.

Block S121, the opening degree of the first throttling element is decreased.

Block S122, whether the intake pressure is smaller than the second predetermined intake pressure is determined. If the intake pressure is smaller than the second predetermined intake pressure, the block S123 is executed. If intake pressure is not smaller than the second predetermined intake pressure, the block S122 is returned.

Block S123, the opening degree of the first throttling element is increased.

Block S124, whether the suction superheat degree is smaller than the second predetermined superheat degree is determined. If the suction superheat degree is smaller than the second predetermined superheat degree, the block S125 is executed. If the suction superheat degree is not smaller than the second predetermined superheat degree, the block S124 is returned.

Block S125, the opening degree of the second throttling element is decreased, and the block S119 is returned.

In summary, according to the low-temperature control method for the heat pump system provided in the embodiments of the present disclosure, in response to the start-up instruction of the heat pump system, the compressor is controlled to operate, and the intake pressure of the compressor is adjusted through controlling the opening degree of the first throttling element until the suction superheat degree exists at the intake port of the compressor; and the rotating speed of the compressor is gradually adjusted; and the intake pressure of the compressor is adjusted through controlling the opening degree of the first throttling element to gradually adjust the rotating speed of the compressor to the target rotating speed while maintaining the intake pressure of the compressor within the predetermined intake pressure range. Thus, the low-temperature control method can control the first throttling element based on the intake pressure of the compressor, effectively avoiding the damage to the compressor caused by the excessively low intake pressure. The low-temperature control method also adjusts the rotating speed based on the feedback of the intake pressure of the compressor, thus preventing the damage to the compressor due to vacuum pumping caused by the excessively rapid increase in the rotating speed.

Corresponding to the above embodiments, the present disclosure further provides a heat pump system.

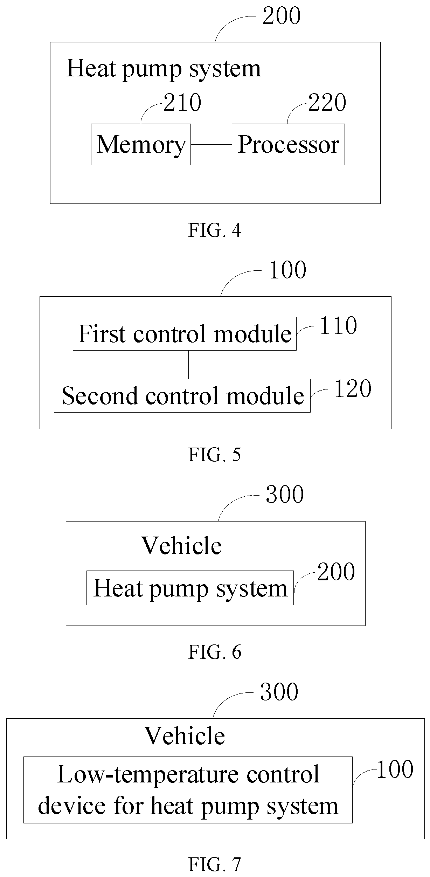

FIG. 4 is a block diagram of the heat pump system according to an embodiment of the present disclosure.

As illustrated in FIG. 4, the heat pump system 200 provided in the embodiments of the present disclosure includes a memory 210, a processor 220, and a program stored on the memory 210 and executable on the processor 220. The processor 220, when executes the program, implements the low-temperature control method for the heat pump system as described above.

According to the heat pump system provided in the embodiments of the present disclosure, through the above low-temperature control method for the heat pump system, the first throttling element can be controlled based on the intake pressure of the compressor, effectively avoiding the damage to the compressor caused by the excessively low intake pressure. The rotating speed can also be adjusted based on the feedback of the intake pressure of the compressor, thus preventing the damage to the compressor due to vacuum pumping caused by the excessively rapid increase in the rotating speed.

Corresponding to the above embodiments, the present disclosure further provides a low-temperature control device for the heat pump system.

FIG. 5 is a block diagram of the low-temperature control device for the heat pump system according to an embodiment of the present disclosure.

As illustrated in FIG. 5, in the low-temperature control device 100 for the heat pump system provided in the embodiments of the present disclosure, the heat pump system includes the heat pump circuit. The heat pump circuit includes the compressor and the first throttling element. Two ends of the first throttling element are respectively connected to the exhaust port and the intake port of the compressor. The low-temperature control device 100 may include a first control module 110 and a second control module 120.

The first control module 110 is configured to, in response to the start-up instruction of the heat pump system, control the compressor to operate; and adjust the intake pressure of the compressor through controlling the opening degree of the first throttling element until the suction superheat degree exists at the intake port of the compressor. The second control module 120 is configured to, subsequent to determining that the suction superheat degree exists at the intake port of the compressor, adjust the rotating speed of the compressor gradually; and adjust the intake pressure of the compressor through controlling the opening degree of the first throttling element to gradually adjust the rotating speed of the compressor to the target rotating speed while maintaining the intake pressure of the compressor within the predetermined intake pressure range

According to an embodiment of the present disclosure, the first control module 110 controls the compressor to operate and adjusts the intake pressure of the compressor through controlling the opening degree of the first throttling element until the suction superheat degree exists at the intake port of the compressor. The first control module is specifically configured to control the compressor to operate at a first predetermined rotating speed; maintain the opening degree of the first throttling element at a first predetermined opening degree; and obtain the intake pressure of the compressor; and in response to the intake pressure increasing to the first predetermined intake pressure, decrease the opening degree of the first throttling element to lower the intake pressure; and in response to the intake pressure decreasing to the second predetermined intake pressure, maintain the opening degree of the first throttling element unchanged until the suction superheat degree exists at the intake port of the compressor. The first predetermined rotating speed is smaller than the target rotating speed, and the first predetermined intake pressure is greater than the second predetermined intake pressure.

According to an embodiment of the present disclosure, the first control module 110 is further configured to obtain the intake temperature of the compressor; determine the saturation temperature corresponding to the intake pressure; obtain the temperature difference between the intake temperature and the saturation temperature corresponding to the intake pressure; and when the temperature difference is greater than the predetermined temperature difference, determine that the suction superheat degree exists at the intake port of the compressor.

According to an embodiment of the present disclosure, the second control module 120 gradually adjusts the rotating speed of the compressor, and adjusts the intake pressure of the compressor through controlling the opening degree of the first throttling element to gradually adjust the rotating speed of the compressor to the target rotating speed while maintaining the intake pressure of the compressor within the predetermined intake pressure range. The second control module 120 is specifically configured to increase the rotating speed of the compressor based on the predetermined step size; obtain the intake pressure of the compressor; in response to the intake pressure reaching the second predetermined intake pressure, maintain the rotating speed of the compressor unchanged; increase the opening degree of the first throttling element to raise the intake pressure; in response to the intake pressure increasing to the first predetermined intake pressure, maintain the opening degree of the first throttling element unchanged; and returning to the operation of increasing the rotating speed of the compressor based on the predetermined step size until the rotating speed of the compressor is gradually adjusted to the target rotating speed.

According to an embodiment of the present disclosure, the heat pump circuit further includes the first heat exchanger connected to the exhaust port of the compressor at the first end of the first heat exchanger, the second heat exchanger, and the second throttling element. The first heat exchanger is connected to the end of the second throttling element at the second end of the first heat exchanger. The other end of the second throttling element is connected to the first end of the second heat exchanger. The second heat exchanger is connected to the intake port of the compressor at the second end of the second heat exchanger. The second control module 120 is further configured to, subsequent to gradually adjusting the rotating speed of the compressor to the target rotating speed: obtain the suction superheat degree of the compressor; and control the opening degree of the second throttling element based on the suction superheat degree to maintain the suction superheat degree within the predetermined suction superheat degree range.

According to an embodiment of the present disclosure, the second control module 120 controls the opening degree of the second throttling element based on the suction superheat degree to maintain the suction superheat degree within the predetermined suction superheat degree range. The second control module 120 is specifically configured to increase the opening degree of the second throttling element when the suction superheat degree is greater than the first predetermined superheat degree; and decrease the opening degree of the second throttling element when the suction superheat degree is smaller than the second predetermined superheat degree. The first predetermined superheat degree is greater than the second predetermined superheat degree.

According to an embodiment of the present disclosure, subsequent to increasing or decreasing the opening degree of the second throttling element, the second control module 120 is further configured to obtain the intake pressure of the compressor; and maintain the intake pressure within the predetermined intake pressure range through controlling the opening degree of the first throttling element based on the intake pressure.

According to an embodiment of the present disclosure, the second control module 120 maintains the intake pressure within the predetermined intake pressure range through controlling the opening degree of the first throttling element based on the intake pressure. The second control module 120 is specifically configured to decrease the opening degree of the first throttling element when the intake pressure is greater than the first predetermined intake pressure; and increase the opening degree of the first throttling element when the intake pressure is smaller than the second predetermined intake pressure. The first predetermined intake pressure is greater than the second predetermined intake pressure.

It should be noted that, for undisclosed details of the low-temperature control device for the heat pump system provided in the embodiments of the present disclosure, reference can be made to the details disclosed in the low-temperature control method for the heat pump system provided in the embodiments of the present disclosure, which will not be repeated herein.

According to the low-temperature control device for the heat pump system provided in the embodiments of the present disclosure, the first control module is configured to, in response to the start-up instruction of the heat pump system, control the compressor to operate; and adjust the intake pressure of the compressor through controlling the opening degree of the first throttling element until the suction superheat degree exists at the intake port of the compressor. The second control module is configured to, subsequent to determining that the suction superheat degree exists at the intake port of the compressor, adjust the rotating speed of the compressor gradually; and adjust the intake pressure of the compressor through controlling the opening degree of the first throttling element to gradually adjust the rotating speed of the compressor to the target rotating speed while maintaining the intake pressure of the compressor within the predetermined intake pressure range. Thus, the low-temperature control device can control the first throttling element based on the intake pressure of the compressor, effectively avoiding the damage to the compressor caused by the excessively low intake pressure. The low-temperature control device also adjusts the rotating speed based on the feedback of the intake pressure of the compressor, thus preventing the damage to the compressor due to vacuum pumping caused by the excessively rapid increase in the rotating speed.

Corresponding to the above embodiments, the present disclosure further provides a vehicle.

As illustrated in FIG. 6, the vehicle 300 provided in the embodiments of the present disclosure may include the above heat pump system 200. Alternatively, as illustrated in FIG. 7, the vehicle 300 provided in the embodiments of the present disclosure may also include the above low-temperature control device 100 for the heat pump system.

According to the vehicle provided in the embodiments of the present disclosure, through the above heat pump system or the low-temperature control device for the heat pump system, the first throttling element can be controlled based on the intake pressure of the compressor, effectively avoiding the damage to the compressor caused by the excessively low intake pressure. The rotating speed can also be adjusted based on the feedback of the intake pressure of the compressor, thus preventing the damage to the compressor due to vacuum pumping caused by the excessively rapid increase in the rotating speed.

It should be noted that, the logic and/or step described in other manners herein or shown in the flow chart, for example, a particular sequence table of executable instructions for realizing the logical function, may be achieved in any computer-readable medium to be used by the instruction execution system, device or apparatus (such as the system based on computers, the system including processors or other systems capable of obtaining the instruction from the instruction execution system, device and apparatus and executing the instruction), or to be used in combination with the instruction execution system, device and apparatus. As to the specification, "the computer-readable medium" may be any device adaptive for including, storing, communicating, propagating or transferring programs to be used by or in combination with the instruction execution system, device or apparatus. More specific examples of the computer-readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

In addition, terms such as "first" and "second" are used herein for purposes of description and are not intended to indicate or imply relative importance, or to implicitly show the number of technical features indicated. Thus, the feature defined with "first" and "second" may explicitly or implicitly include one or more this feature. In the description of the present disclosure, "a plurality of" means two or more, unless specified otherwise.

In the description of the present disclosure, it should be noted that, unless otherwise clearly specified and limited, terms such as "install", "connect", "connect to", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless specified otherwise. For those of ordinary skill in the art, the specific meaning of the above-described terms in the present disclosure can be understood according to specific circumstances.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

## Claims

1. A low-temperature control method for a heat pump system, the heat pump system comprising a heat pump circuit, the heat pump circuit comprising a compressor and a first throttling element, two ends of the first throttling element being respectively connected to an exhaust port and an intake port of the compressor, and the low-temperature control method comprising:
in response to a start-up instruction of the heat pump system, controlling the compressor to operate; and adjusting an intake pressure of the compressor through controlling an opening degree of the first throttling element until a suction superheat degree exists at the intake port of the compressor; and
adjusting a rotating speed of the compressor gradually; and adjusting the intake pressure of the compressor through controlling the opening degree of the first throttling element to gradually adjust the rotating speed of the compressor to a target rotating speed while maintaining the intake pressure of the compressor within a predetermined intake pressure range.

2. The low-temperature control method according to claim 1, wherein said controlling the compressor to operate, and adjusting the intake pressure of the compressor through controlling the opening degree of the first throttling element until the suction superheat degree exists at the intake port of the compressor comprises:
controlling the compressor to operate at a first predetermined rotating speed; maintaining the opening degree of the first throttling element at a first predetermined opening degree; and obtaining the intake pressure of the compressor; and
in response to the intake pressure increasing to a first predetermined intake pressure, decreasing the opening degree of the first throttling element to lower the intake pressure; and in response to the intake pressure decreasing to a second predetermined intake pressure, maintaining the opening degree of the first throttling element unchanged until the suction superheat degree exists at the intake port of the compressor,
wherein the first predetermined rotating speed is smaller than the target rotating speed, and wherein the first predetermined intake pressure is greater than the second predetermined intake pressure.

3. The low-temperature control method according to claim 2, further comprising:
obtaining an intake temperature of the compressor; and determining a saturation temperature corresponding to the intake pressure;
obtaining a temperature difference between the intake temperature and the saturation temperature corresponding to the intake pressure; and
when the temperature difference is greater than a predetermined temperature difference, determining that the suction superheat degree exists at the intake port of the compressor.

4. The low-temperature control method according to claim 2, wherein said adjusting the rotating speed of the compressor gradually; and adjusting the intake pressure of the compressor through controlling the opening degree of the first throttling element to gradually adjust the rotating speed of the compressor to the target rotating speed while maintaining the intake pressure of the compressor within the predetermined intake pressure range comprises:
increasing the rotating speed of the compressor based on a predetermined step size; and obtaining the intake pressure of the compressor; and
in response to the intake pressure reaching the second predetermined intake pressure, maintaining the rotating speed of the compressor unchanged; and increasing the opening degree of the first throttling element to raise the intake pressure; and in response to the intake pressure increasing to the first predetermined intake pressure, maintaining the opening degree of the first throttling element unchanged; and returning to an operation of increasing the rotating speed of the compressor based on the predetermined step size until the rotating speed of the compressor is gradually adjusted to the target rotating speed.

5. The low-temperature control method according to any one of claims 1 to 4, wherein the heat pump circuit further comprises a first heat exchanger connected to the exhaust port of the compressor at a first end of the first heat exchanger, a second heat exchanger, and a second throttling element, wherein the first heat exchanger is connected to an end of the second throttling element at a second end of the first heat exchanger, wherein the other end of the second throttling element is connected to a first end of the second heat exchanger, wherein the second heat exchanger is connected to the intake port of the compressor at a second end of the second heat exchanger, and wherein the low-temperature control method further comprises, subsequent to gradually adjusting the rotating speed of the compressor to the target rotating speed:
obtaining the suction superheat degree of the compressor; and
controlling an opening degree of the second throttling element based on the suction superheat degree to maintain the suction superheat degree within a predetermined suction superheat degree range.

6. The low-temperature control method according to claim 5, wherein said controlling the opening degree of the second throttling element based on the suction superheat degree to maintain the suction superheat degree within the predetermined suction superheat degree range comprises:
increasing the opening degree of the second throttling element when the suction superheat degree is greater than a first predetermined superheat degree; and
decreasing the opening degree of the second throttling element when the suction superheat degree is smaller than a second predetermined superheat degree,
wherein the first predetermined superheat degree is greater than the second predetermined superheat degree.

7. The low-temperature control method according to claim 6, further comprising, subsequent to increasing or decreasing the opening degree of the second throttling element:
obtaining the intake pressure of the compressor; and
maintaining the intake pressure within the predetermined intake pressure range through controlling the opening degree of the first throttling element based on the intake pressure.

8. The low-temperature control method according to claim 7, wherein said maintaining the intake pressure within the predetermined intake pressure range through controlling the opening degree of the first throttling element based on the intake pressure comprises:
decreasing the opening degree of the first throttling element when the intake pressure is greater than a first predetermined intake pressure; and
increasing the opening degree of the first throttling element when the intake pressure is smaller than a second predetermined intake pressure,
wherein the first predetermined intake pressure is greater than the second predetermined intake pressure.

9. A low-temperature control device for a heat pump system, the heat pump system comprising a heat pump circuit, the heat pump circuit comprising a compressor and a first throttling element, two ends of the first throttling element being respectively connected to an exhaust port and an intake port of the compressor, and the low-temperature control device comprising:
a first control module configured to, in response to a start-up instruction of the heat pump system, control the compressor to operate; and adjust an intake pressure of the compressor through controlling an opening degree of the first throttling element until a suction superheat degree exists at the intake port of the compressor; and
a second control module configured to, subsequent to determining that the suction superheat degree exists at the intake port of the compressor, adjust a rotating speed of the compressor gradually; and adjust the intake pressure of the compressor through controlling the opening degree of the first throttling element to gradually adjust the rotating speed of the compressor to a target rotating speed while maintaining the intake pressure of the compressor within a predetermined intake pressure range

10. A vehicle, comprising the low-temperature control device for the heat pump system according to claim 9.
